# EUROPEAN PATENT APPLICATION

(11) **EP 2 760 226 A1**
(43) Date of publication of application: **30.07.2014**
(21) Application number: 14152877.8
(22) Date of filing: 28.01.2014
(51) Int. Cl.: H04W 4/00

(54) **Method and system for providing NFC service in electronic device not having NFC module**

(30) Priority: 28.01.2013 KR 20130009299
(71) Applicant: Samsung Electronics Co., Ltd, Gyeonggi-do 443-742 (KR)
(72) Inventor: Kim, Hyogil, 443-742 Gyeonggi-do (KR); Lee, Jaemin, 443-742 Gyeonggi-do (KR); Yoon, Janghyun, 443-742 Gyeonggi-do (KR); Choi, Kibong, 443-742 Gyeonggi-do (KR)
(74) Representative: Jenkins, Richard Gavin

(57) **Abstract**

A system provides NFC service, comprising a second mobile terminal including, an NFC module for acquiring an NFC Data Exchange Format (NDEF) message from an NFC tag and an executable NFC application supporting automatically forwarding information comprising the NFC Data Exchange Format (NDEF) message data to a first mobile terminal. A wireless communication unit forwards the information to the first mobile terminal using a non-NFC communication method in response to at least one of, (a) a request message received from the first mobile terminal and (b) a predetermined stored command.

## Description

### BACKGROUND

### Field of the Invention

The present invention concerns a Near Field Communication (NFC) service system usable in an electronic device without an NFC module.

### Description of the Related Art

Known mobile terminals provide a wide variety of functions including a call function, an image or moving image capturing function, a broadcasting reception function, and an Internet access function. Further, Near Field Communication (NFC) services employ radio communication over short distances of about 10 cm at a frequency of 13.56 MHz. Examples of fields in which the NFC service is widely used include application as a transportation card, a mobile wallet, and an electronic ticket.

In order to provide an NFC service, a mobile terminal needs an NFC module. That is, NFC service cannot be provided using a mobile terminal that does not include an NFC module. For this reason, a user needs to purchase a terminal that includes an NFC module in order to use NFC service. Furthermore, NFC service is problematic in that it is difficult to apply NFC service to types of electronic devices due to the limited range. An NFC module needs to be brought into contact with an NFC tag installed in a fixed location in order to use the NFC service. For this reason, the NFC service is chiefly used in a mobile terminal having a relatively small size.

### SUMMARY

The inventors have advantageously recognized a need for a system that enables the use of NFC service in electronic devices that do not include NFC modules.

A system provides NFC service, comprising a second mobile terminal including, an NFC module for acquiring an NFC Data Exchange Format (NDEF) message from an NFC tag and an executable NFC application supporting automatically forwarding information comprising the NFC Data Exchange Format (NDEF) message data to a first mobile terminal. A wireless communication unit forwards the information to the first mobile terminal using a non-NFC communication method in response to at least one of, (a) a request message received from the first mobile terminal and (b) a predetermined stored command.

In a feature, the first mobile terminal excludes a Near Field Communication (NFC) module and the second mobile terminal communication unit forwards the read NDEF message to the first mobile terminal through one of a multimedia message, an instant message, e-mail, Bluetooth, infrared communication, Zigbee, Wi-Fi direct, and a Ultra Wide Band (UWB) communication. The second mobile terminal reads the NDEF message from the NFC tag in an NFC sharing mode and in response to the NDEF message being read from the NFC tag, the second mobile terminal provides a selection menu enabling selection of at least one of, (a) a method of forwarding the NDEF message and (b) a destination reception terminal to which the NDEF message is to be transmitted. The second mobile terminal determines a type of the read NDEF message and forwards the read NDEF message to the first mobile terminal in response to the determined message type. Further, the second mobile terminal indicates that sharing of the read NDEF message is inhibited in response to a determined non-sharing type. The second mobile terminal decrypts the received NDEF message, and executes a function in response to the decrypted NDEF message.

In a further feature, the second mobile terminal decrypts the received NDEF message, and executes a function in response to the decrypted NDEF message. In response to an NDEF message being received from the second mobile terminal, the first mobile terminal indicates that the NDEF message has been received, decrypts the received NDEF message when a request to decrypt the received NDEF message is received, and executes a function corresponding to the decrypted NDEF message.

In another feature, a method provides NFC service in an electronic device excluding a Near Field Communication (NFC) module by receiving an NFC Data Exchange Format (NDEF) message using a non-NFC communication method excluding use of NFC communication. The method decrypts the received NDEF message and executes a function in response to the decrypted NDEF message. The non-NFC communication method comprises via one of a multimedia message, an instant message, e-mail, Bluetooth, infrared communication, Zigbee, Wi-Fi direct, and an Ultra Wide Band (UWB) communication.

In another feature, the method further comprises generating and communicating an acknowledgement message indicating that the NDEF message has been received. A mobile terminal including an NFC module is used for, reading an NDEF message acquired from an NFC tag and sending the read NDEF message to the electronic device. A method of sending the read NDEF message, is selected and a destination reception terminal to which the read NDEF message is to be transmitted, is selected. Also a type of the read NDEF message is determined, the read NDEF message is sent to the electronic device in response to the read NDEF message being a sharing type and the read NDEF message is inhibited from sending to the electronic device in response to the read NDEF message being a non-sharing type. The method generates a message indicating that sharing of the read NDEF message is inhibited, as a result of the type determination.

### BRIEF DESCRIPTION OF THE DRAWINGS

FIG. 1 shows a system for providing NFC service in accordance with invention principles;
FIG. 2 shows a flowchart of a method in which a first mobile terminal without an NFC module receives an NDEF message in accordance with invention principles;
FIG. 3 shows a flowchart of a method in which the first mobile terminal without an NFC module writes an NDEF message to an NFC tag in accordance with invention principles;
FIG. 4 shows a system configuration of the first mobile terminal v; and
FIG. 5 shows a system configuration of a second mobile terminal in accordance with invention principles.

### DETAILED DESCRIPTION

Hereinafter, exemplary embodiments of the present disclosure are described in detail with reference to the accompanying drawings. It is to be noted that the same reference numbers are used throughout the drawings to refer to the same elements. For the purposes of clarity and simplicity, a detailed description of known functions or constructions that may make the subject matter of the present disclosure obscure is omitted.

Meanwhile, the embodiments disclosed in the present specification and drawings are illustrated to present only specific examples in order to clarify the technical contents of the present disclosure and help understanding of the present disclosure, but are not intended to limit the scope of the present disclosure. It will be evident to those skilled in the art that implementations based on the technical spirit of the present disclosure are possible in addition to the disclosed embodiments.

A system advantageously enables an NFC service to be used in an electronic device that does not include an NFC module and receives an NDEF message from a mobile terminal that includes an NFC module by different data transfer methods.

An electronic device comprises a mobile terminal, such as a mobile communication terminal, a smart phone, a tablet Personal Computer (PC), a portable multimedia player, or a personal digital assistant and a non-mobile terminal, such as a desktop PC or smart television (TV).

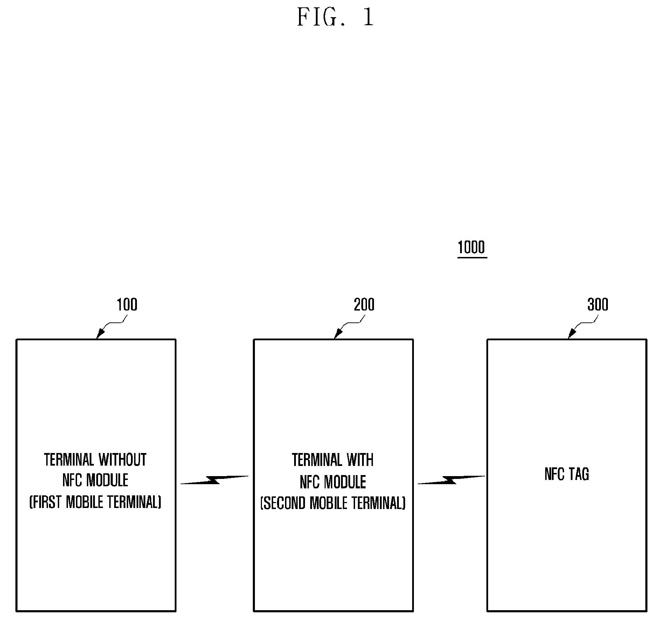

FIG. 1 shows a system for providing NFC service in a (first) mobile terminal that does not include an NFC module operating together with a (second) mobile terminal that includes an NFC module. System 1000 includes a first mobile terminal 100, a second mobile terminal 200, and an NFC tag 300. The first mobile terminal 100 is a mobile terminal that does not include an NFC module, the second mobile terminal 200 is a mobile terminal that includes an NFC module, and the NFC tag 300 is a device to which information in an NFC Data Exchange Format (NDEF) (hereinafter referred to as an NDEF message) is written.

In response to the second mobile terminal 200 approaching within a specific distance (e.g. 10 cm) of NFC tag 300, the second mobile terminal 200 reads an NDEF message stored in the NFC tag 300. If the second mobile terminal 200 is in an NFC sharing mode, the second mobile terminal 200 sends the read NDEF message to the first mobile terminal 100. The second mobile terminal 200 sends the NDEF message to the first mobile terminal 100 through a multimedia message (MMS), e-mail, or Instant Message (IM) service. Alternatively, the second mobile terminal 200 may send the NDEF message to the first mobile terminal 100 using short-range wireless communication, such as Bluetooth communication, infrared communication, Wi-Fi direct, Zigbee, or an Ultra Wide Band (UWB).

When the NDEF message is received, the first mobile terminal 100 decrypts the received NDEF message and performs a function in response to the decrypted NDEF message. For example, if the NDEF message is a link to a URL, the first mobile terminal 100 requests access to a corresponding web page. In another example, if the NDEF message is a command to execute a specific function, the first mobile terminal 100 executes the corresponding application (App) or function (e.g., image output function or video playback function). A manufacturer or user installs an application (hereinafter referred to as an NFC App) advantageously capable of decrypting the NDEF message in the first mobile terminal 100.

The second mobile terminal 200 sends the NDEF message to the first mobile terminal 100 through wireless communication or short-range wireless communication. Thereby, a user of the first mobile terminal 100, which does not include an NFC module, can use an NFC service. Furthermore, NFC service is usable in a desktop PC or smart TV (not shown).

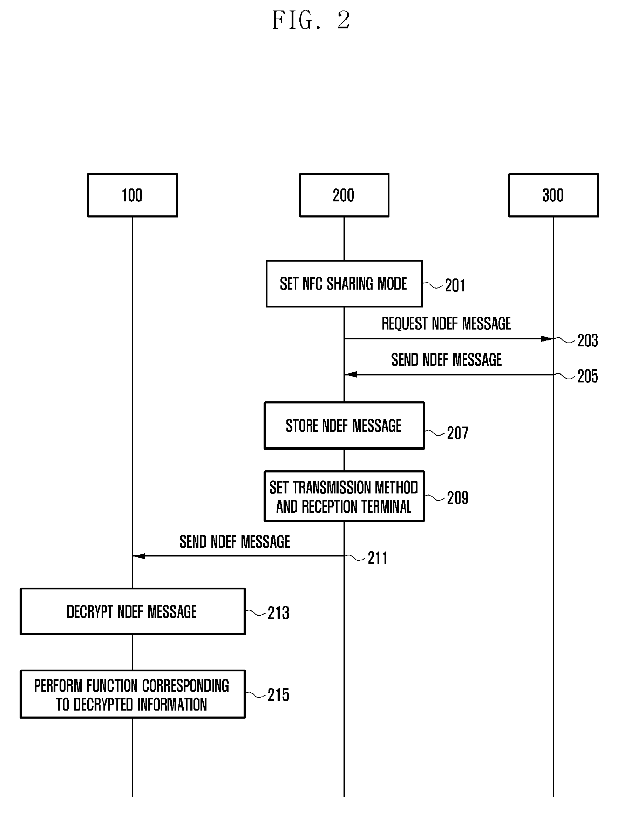

FIG. 2 shows a flowchart of a method and communication exchange in which the first mobile terminal 100, excluding an NFC module, receives an NDEF message. The second mobile terminal 200 selects an NFC sharing mode at operation 201. In response to the second mobile terminal 200 approaching within a specific distance (e.g. 10 cm) from the NFC tag 300, the second mobile terminal 200 requests an NDEF message from the NFC tag 300 at operation 203. The second mobile terminal 200 sends the command "read tag ()" to the NFC tag 300. In response, the second mobile terminal 200 receives the NDEF message from the NFC tag 300 at operation 205.

In response to receiving the NDEF message, the second mobile terminal 200 stores the NDEF message at operation 207 and selects a transmission method and a destination reception terminal at operation 209. The second mobile terminal 200 provides and displays a selection menu for selecting a destination reception terminal to which the NDEF message is transmitted as well as a transmission method. For example, the second mobile terminal 200 provides a menu presenting a telephone number, an e-mail address, and associated names of devices for selection or enables user data entry of the information. In response to selection of a reception terminal, the second mobile terminal 200 provides and displays a menu enabling selection of a transmission method. The transmission method comprises short-range wireless communication methods, such as MMS, e-mail, IMS, Bluetooth, infrared communication, Wi-Fi direct, Zigbee, and UWB, for example. First mobile terminal 100 is selected herein as a destination reception terminal. Further, in response to selection of the transmission method and destination reception terminal, the second mobile terminal 200 sends the NDEF message to the first mobile terminal 100 using the selected transmission method at operation 211.

In response to receiving the NDEF message, the first mobile terminal 100 decrypts the received NDEF message at operation 213 and performs a function corresponding to the decrypted information at operation 215. For example, if the decrypted information includes a link to a URL, the first mobile terminal 100 performs a corresponding web page access function. If the decrypted information includes an image, the first mobile terminal 100 performs an image output function. If the decrypted information includes a moving image, the first mobile terminal 100 performs a video playback function. First mobile terminal 100, which does not include an NFC module, advantageously uses information provided by the NFC tag 300. Further, in an embodiment, the first mobile terminal 100 awaits a request to decrypt the received NDEF message and decrypts the message upon receiving such a request.

In other embodiments, the second mobile terminal 200 may read an NDEF message from the NFC tag 300 after a transmission method and a reception terminal are selected and operation 209 is performed after the operation 201. Also, second mobile terminal 200 acquires a plurality of NDEF messages from a plurality of NFC tags 300 and stores the plurality of NDEF messages. In response to executing the NFC sharing mode, the second mobile terminal 200 provides and displays a list of the stored NDEF messages, enabling a user to select an NDEF message to be transmitted from the list. Terminal 200 selects a transmission method and a reception terminal and sends the selected NDEF message to the reception terminal through the selected transmission method.

The system in an embodiment, shares an NDEF message of a particular type with a particular destination terminal and excludes sharing NDEF messages of other types to protect personal information. For example, when a request to share an NDEF message is received, the second mobile terminal 200 determines the type of NDEF message and if it is of a type selected to be shared, the second mobile terminal 200 performs a sharing function. If, the NDEF message is of a non-sharing type, the second mobile terminal 200 informs a user via a displayed message, for example, that a sharing function cannot be performed. An NDEF message of a sharing type includes text, a URL, an image, or a moving image, for example and a non-sharing NDEF message includes personal information, such as a transportation card or card payment, access codes or financial information.

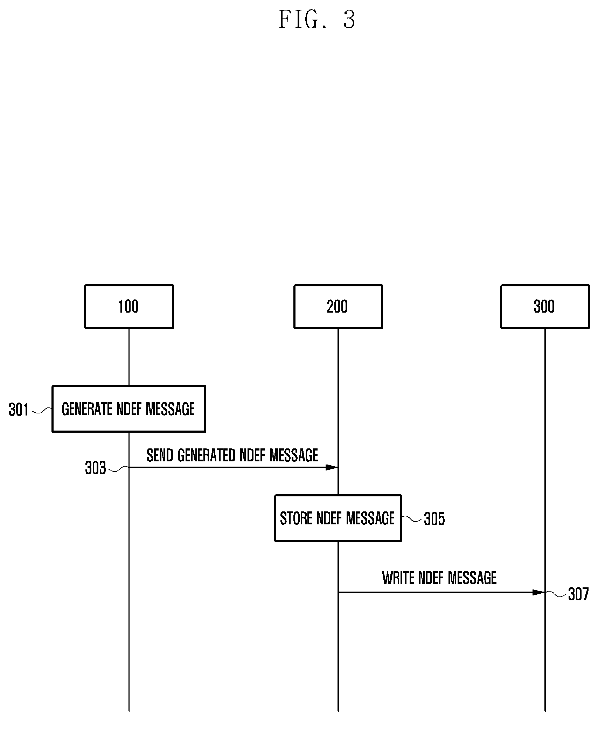

FIG. 3 shows a flowchart of a method and data exchange in which the first mobile terminal 100 without an NFC module writes an NDEF message to an NFC tag. First mobile terminal 100 generates an NDEF message at operation 301 that is to be written to the NFC tag 300 and is configured to order the execution of a specific function by means of the NDEF message-generation function of an NFC App.

The first mobile terminal 100 sends a generated NDEF message to the second mobile terminal 200 at the request of a user at operation 303. Terminal 100 provides a menu for user selection of destination terminal (here terminal 200) and transmission method. The first mobile terminal 100 sends the generated NDEF message and a writing request to the selected second mobile terminal 200 using an MMS message, e-mail, an IM message, Bluetooth, Zigbee, infrared communication, UWB, or Wi-Fi direct. In response to receiving the generated NDEF message and the writing request, the second mobile terminal 200 stores the NDEF message at operation 305 and at operation 307 writes the generated NDEF message to the NFC tag 300 in an automatically activated NDEF message-writing mode. When the second mobile terminal 200 comes within a specific distance of the NFC tag 300, terminal 200 writes the generated NDEF message to the NFC tag 300. Alternatively, when an NDEF message is received from the first mobile terminal 100, terminal 200 indicates that the NDEF message and a writing request have been received, and displays a pop-up window prompting selection of whether or not to activate an NDEF message-writing mode. A user activates the NDEF message-writing mode through the pop-up window. Terminal 200 writes the NDEF message to the NFC tag 300 when terminal 200 comes within a specific distance of the NFC tag 300. Further, operation 305 of FIG. 3 may be a temporary operation and terminal 200 deletes the temporarily stored NDEF message once sent.

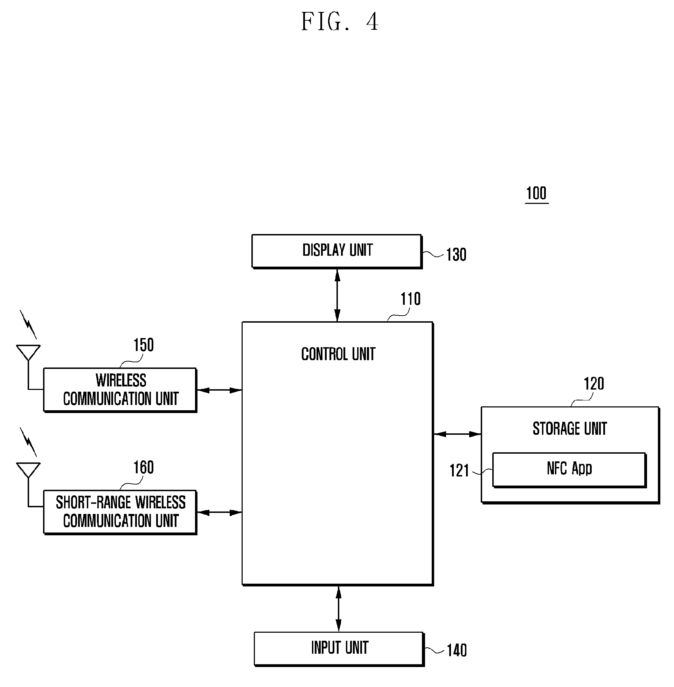

FIG. 4 shows a first mobile terminal 100 including a control unit 110, a storage unit 120 including an NFC App 121, a display unit 130, an input unit 140, a wireless communication unit 150, and a short-range wireless communication unit 160. The wireless communication unit 150 includes a Radio Frequency (RF) transmission unit (not shown) for performing frequency up-conversion and amplification of a signal to be transmitted, and an RF reception unit (not shown) for performing downconversion and amplification on a received signal. The wireless communication unit 150 sends and receives an NDEF message transmitted in a form such as e-mail, an instant message, or an MMS message from the second mobile terminal 200. The short-range wireless communication unit 160 operates over relatively short distances (e.g. 10 cm). The short-range wireless communication unit 160 comprises a Bluetooth communication module, an infrared communication module, a Wi-Fi communication module supporting Wi-Fi direct, a Zigbee communication module, or an Ultra Wide Band (UWB) communication module, for example.

The input unit 140 includes a plurality of input keys and function keys for receiving numerical and alphabetic information and for selecting functions. The function keys include direction keys, side keys, and keyboard shortcut keys configured to perform specific functions. Furthermore, the input unit 140 generates key signals related to user setting and control of the function of the first mobile terminal 100 and transfers the key signals to the control unit 110. The input unit 140 may be a qwerty keypad, a 3*4 keypad, a 4*3 keypad, a Ball Joystick, an optical Joystick, a wheel key, a touch key, a touch pad, and a touch screen, or a combination of such input means, for example. If the first mobile terminal 100 supports a touch screen, the input unit 140 may comprise a volume key for controlling the volume and function keys for screen on/off and power on/off, which are formed on the side of the casing of the first mobile terminal 100. In particular, the input unit 140 generates input signals for controlling an NDEF message sharing and generation method using information, such as text, an image, a moving image, or a URL, and couples the input signals to the control unit 110.

The display unit 130 displays menus for the first mobile terminal 100, information input by a user, and information to be provided to a user. For example, the display unit 130 provides screens (e.g., a home screen, a message-writing screen, an incoming and/or outgoing text message display screen, a web page screen, and a call screen) according to the use of the first mobile terminal 100. The display unit 130 is formed of a liquid crystal display, Organic Light-Emitting Diodes (OLEDs), or Active Matrix Organic Light-Emitting Diodes (AMOLEDs). In particular, the display unit 130 displays a screen for controlling an NDEF message sharing method. For example, the display unit 130 displays a screen on which the reception of an NDEF message is indicated, a screen on which information corresponding to an NDEF message is provided, and a function execution screen. Furthermore, the display unit 130 displays a screen on which the NDEF message-generation procedure is controlled. For example, the display unit 130 displays the NDEF message generating screen and a screen for selection of the transmission method and the destination reception terminal. If the display unit 130 is configured in a touch screen form, the display unit 130 performs the functions of the input unit 140.

The storage unit 120 stores the Operating System (OS) of the first mobile terminal 100, application programs for other option functions (e.g., a sound play function, an image or video playback function, and a broadcasting play function), user data, and transmitted and received data. For example, the storage unit 120 stores a moving image file, a game file, a music file, and a movie file. In particular, the storage unit 120 decrypts an NDEF message received from the second mobile terminal 200, or stores the NFC App 121 for generating an NDEF message. The NFC App 121 is installed by a terminal manufacturer, or is installed by a user by using an App market.

The control unit 110 controls the overall operation of the first mobile terminal 100 and the flow of signals between the internal elements of the first mobile terminal 100, and performs a data processing function for processing data. For example, the control unit 110 is a Central Processing Unit (CPU) or an application processor. The control unit 110 is formed of a single core processor or a multi-core processor.

The control unit 110 controls the NDEF message sharing method and decrypts an NDEF message received through the wireless communication unit 150 or the short-range wireless communication unit 160 using the NFC App 121 and performs a function corresponding to the decrypted information. Alternatively, after storing the received NDEF message, the control unit 110 decrypts the stored NDEF message at the request of a user and performs a corresponding function.

The control unit 110 generates an NDEF message to be written to the NFC tag 300 through the second mobile terminal 200 and converts data selected by a user, such as text, an image, a moving image, or a URL and generates an NDEF message using the converted data. The control unit 110 sends the generated NDEF message to the second mobile terminal 200 using the wireless communication unit 150 or the short-range wireless communication unit 160.

Although not shown in FIG. 4, the first mobile terminal 100 selectively includes elements having supplementary functions, such as a Global Positioning System (GPS) module for receiving position information, a broadcasting reception module for receiving broadcasts, and a digital sound source play module such as an MP3 module. Not all the elements are listed because the elements are modified in different ways and are also included in the first mobile terminal 100.

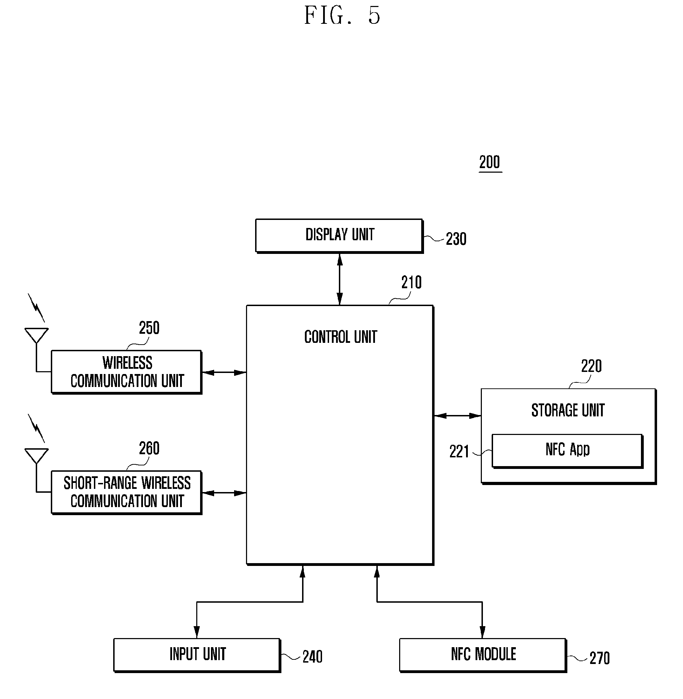

FIG. 5 shows second mobile terminal 200 including a control unit 210, a storage unit 220 including NFC App 221, a display unit 230, an input unit 240, a wireless communication unit 250, a short-range wireless communication unit 260, and an NFC module 270. A description of elements performing the same functions as those of the first mobile terminal 100 is omitted for the convenience of description. NFC module 270 read an NDEF message from the NFC tag 300 or writes an NDEF message to the NFC tag 300 received from the first mobile terminal 100, to the NFC tag 300.

In response to terminal 200 coming within a specific distance of the NFC tag 300 in NFC sharing mode, the control unit 210 requests and receives an NDEF message from the NFC tag 300. The NDEF message is sent to a predetermined destination reception terminal. In contrast, if a transmission method and a destination reception terminal are not selected, the control unit 210 displays a menu on display unit 230 enabling user selection of a transmission method and a destination reception terminal. Control unit 210 sends the NDEF message to the selected reception terminal using the selected transmission method.

The control unit 210 receives an NDEF message and an NDEF writing request from a terminal without an NFC module (e.g., the first mobile terminal 100) through the wireless communication unit 250 or the short-range wireless communication unit 260. Control unit 210 writes the received NDEF message to the NFC tag 300 by executing a writing mode of NFC App 221. In response to the second mobile terminal 200 coming within proximity (and a specific distance) of the NFC tag 300, the control unit 210 initiates writing of NDEF message received from the first mobile terminal 100 to the NFC tag 300.

Control unit 210 informs a user that writing of the NDEF message is complete upon the NDEF message being written to the NFC tag 300. For example, the control unit 210 initiates generation of a predetermined sound effect or vibration, a screen flash, or a pop-up message upon completion of message writing. The system may be implemented in the form of a program executable by a computer and be stored in a computer-readable recording medium. The computer-readable medium includes a program, a data file, a data structure, alone or in combination. The computer-readable recording medium includes a hardware device specially configured to store and execute the program, such as a magnetic medium including a hard disk, a floppy disk, and a magnetic tape, an optical medium such as a CD-ROM or DVD, or a magneto-optical medium, such as a floptical disk, ROM, RAM, or flash memory. Furthermore, the program may include both machine-language code, such as code written by a compiler, and high-level language code, which is executable by a computer using an interpreter. The hardware device be configured in the form of one or more software modules.

The system advantageously enables a user to use an NFC service on electronic devices without physical or distance limits. For example, if NFC service is desired to be used in a desktop PC, a user reads an NDEF message from the NFC tag using his or her mobile terminal that includes an NFC module, attaches the read NDEF message to e-mail, and sends the e-mail to the desktop PC.

Although specific terms are used, the terms are merely used according to their common meanings in order to easily describe technical content that is not limited to the aforementioned described embodiments. It will be evident to those skilled in the art that other embodiments based on the principles described herein may be implemented.

The above-described embodiments can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. The functions and process steps herein may be performed automatically or wholly or partially in response to user command. An activity (including a step) performed automatically is performed in response to executable instruction or device operation without user direct initiation of the activity. No claim element herein is to be construed under the provisions of 35 U.S.C. 112, sixth paragraph, unless the element is expressly recited using the phrase "means for."

## Claims

1. A system for providing NFC service, comprising:
a second mobile terminal including,
an NFC module for acquiring an NFC Data Exchange Format (NDEF) message from an NFC tag and
an executable NFC application supporting automatically forwarding information comprising the NFC Data Exchange Format (NDEF) message data to a first mobile terminal; and
a wireless communication unit for forwarding the information to the first mobile terminal using a non-NFC communication method in response to at least one of,
(a) a request message received from the first mobile terminal and
(b) a predetermined stored command.

2. The system of claim 1, wherein the first mobile terminal excludes a Near Field Communication (NFC) module and the second mobile terminal communication unit forwards the read NDEF message to the first mobile terminal through one of a multimedia message, an instant message, e-mail, Bluetooth, infrared communication, Zigbee, Wi-Fi direct, and a Ultra Wide Band (UWB) communication.

3. The system of claim 1, wherein the second mobile terminal reads the NDEF message from the NFC tag in an NFC sharing mode and
in response to the NDEF message being read from the NFC tag, the second mobile terminal provides a selection menu enabling selection of at least one of,
(a) a method of forwarding the NDEF message and
(b) a destination reception terminal to which the NDEF message is to be transmitted.

4. The system of claim 1, wherein the second mobile terminal determines a type of the read NDEF message and forwards the read NDEF message to the first mobile terminal in response to the determined message type.

5. The system of claim 4, wherein the second mobile terminal indicates that sharing of the read NDEF message is inhibited in response to a determined non-sharing type.

6. The system of claim 1, wherein the second mobile terminal decrypts the received NDEF message, and executes a function in response to the decrypted NDEF message.

7. The system of claim 1, wherein the second mobile terminal decrypts the received NDEF message, and executes a function in response to the decrypted NDEF message.
wherein when an NDEF message is received from the second mobile terminal, the first mobile terminal indicates that the NDEF message has been received, decrypts the received NDEF message when a request to decrypt the received NDEF message is received, and executes a function corresponding to the decrypted NDEF message.

8. A method for providing NFC service in an electronic device excluding a Near Field Communication (NFC) module, the method comprising:
receiving an NFC Data Exchange Format (NDEF) message using a non-NFC communication method excluding use of NFC communication;
decrypting the received NDEF message; and
executing a function in response to the decrypted NDEF message.

9. The method of claim 8, wherein the non-NFC communication method comprises via one of a multimedia message, an instant message, e-mail, Bluetooth, infrared communication, Zigbee, Wi-Fi direct, and an Ultra Wide Band (UWB) communication.

10. The method of claim 8, wherein the receiving of the NDEF message comprises generating and communicating an acknowledgement message indicating that the NDEF message has been received.

11. The method of claim 8, further comprising:
using a mobile terminal including an NFC module for,
reading an NDEF message acquired from an NFC tag; and
sending the read NDEF message to the electronic device.

12. The method of claim 11, wherein the sending the read NDEF message to the electronic device comprises:
selecting a method of sending the read NDEF message; and
selecting a destination reception terminal to which the read NDEF message is to be transmitted.

13. The method of claim 11, including,
determining a type of the read NDEF message; and
sending the read NDEF message to the electronic device in response to the read NDEF message being a sharing type and
inhibiting sending the read NDEF message to the electronic device in response to the read NDEF message being a non-sharing type.

14. The method of claim 12, further comprising generating a message indicating that sharing of the read NDEF message is inhibited, as a result of the type determination.
